Europäisches Patentamt

European Patent Office

Office européen des brevets

(19)

(11)     **EP 1 407 446 B1**

(12)        **EUROPÄISCHE PATENTSCHRIFT**

(45) Veröffentlichungstag und Bekanntmachung des Hinweises auf die Patenterteilung:
**17.11.2004   Patentblatt 2004/47**

(51) Int Cl.$^7$: **G10H 1/00**

(21) Anmeldenummer: **02758344.2**

(86) Internationale Anmeldenummer:
**PCT/EP2002/007848**

(22) Anmeldetag: **15.07.2002**

(87) Internationale Veröffentlichungsnummer:
**WO 2003/009273 (30.01.2003 Gazette 2003/05)**

(54) **VERFAHREN UND VORRICHTUNG ZUM CHARAKTERISIEREN EINES SIGNALS UND ZUM ERZEUGEN EINES INDEXIERTEN SIGNALS**

METHOD AND DEVICE FOR CHARACTERISING A SIGNAL AND FOR PRODUCING AN INDEXED SIGNAL

PROCEDE ET DISPOSITIF POUR CARACTERISER UN SIGNAL ET POUR PRODUIRE UN SIGNAL INDEXE

(84) Benannte Vertragsstaaten:
**AT BE BG CH CY CZ DE DK EE ES FI FR GB GR IE IT LI LU MC NL PT SE SK TR**

(30) Priorität: **16.07.2001   DE 10134471**

(43) Veröffentlichungstag der Anmeldung:
**14.04.2004   Patentblatt 2004/16**

(73) Patentinhaber: **FRAUNHOFER-GESELLSCHAFT ZUR FÖRDERUNG DER ANGEWANDTEN FORSCHUNG E.V.
80636 München (DE)**

(72) Erfinder:
• **ALLAMANCHE, Eric
  90425 Nürnberg (DE)**

• **HERRE, Jürgen
  91054 Buckenhof (DE)**
• **HELLMUTH, Oliver
  91058 Erlangen (DE)**
• **KASTNER, Thorsten
  96342 Stockheim / Reitsch (DE)**

(74) Vertreter: **Schoppe, Fritz, Dipl.-Ing.
Patentanwälte Schoppe, Zimmermann, Stöckeler & Zinkler,
Postfach 246
82043 Pullach bei München (DE)**

(56) Entgegenhaltungen:
**WO-A-01/04870                US-A- 5 210 820
US-A- 5 402 339**

**Beschreibung**

Die vorliegende Erfindung bezieht sich auf das Charakterisieren von Audiosignalen hinsichtlich ihres Inhalts und insbesondere auf ein Konzept zum Klassifizieren bzw. Indexieren von Audiostücken hinsichtlich ihres Inhalts, um eine Recherchierbarkeit solcher Multimediadaten zu ermöglichen.

In den letzten Jahren ist die Verfügbarkeit multimedialen Datenmaterials, d. h. von Audiodaten, stark gestiegen. Diese Entwicklung wurde durch eine Reihe von technischen Faktoren bedingt. Diese technischen Faktoren umfassen beispielsweise die breite Verfügbarkeit des Internets, die breite Verfügbarkeit leistungsfähiger Rechner sowie die breite Verfügbarkeit leistungsfähiger Verfahren zur Datenkompression, d. h. Quellcodierung, von Audiodaten. Als Beispiel hierfür ist MPEG 1/2 Layer 3 genannt, das auch als MP3 bezeichnet wird.

Die riesigen Mengen audiovisueller Daten, die beispielsweise auf dem Internet weltweit verfügbar sind, verlangen nach Konzepten, die es ermöglichen, diese Daten nach inhaltlichen Kriterien zu beurteilen, zu katalogisieren oder zu verwalten. Es besteht der Bedarf, multimediale Daten gezielt durch Angabe sinnvoller Kriterien zu suchen und zu finden.

Dies erfordert den Einsatz sogenannter "inhaltsbasierter" Techniken, die aus den audiovisuellen Daten sogenannte Merkmale, die in der Technik auch als "Features" bezeichnet werden, extrahieren, die wichtige charakteristische Inhalts-Eigenschaften des interessierenden Signals darstellen. Basierend auf solchen Merkmalen bzw. Kombinationen solcher Merkmale können Ähnlichkeitsbeziehungen bzw. Gemeinsamkeiten zwischen den Audiosignalen hergeleitet werden. Dieser Vorgang erfolgt im allgemeinen durch Vergleich bzw. In-Beziehungsetzen der extrahierten Merkmalswerte aus verschiedenen Signalen, welche hier auch als "Stücke" bezeichnet werden sollen.

Das US-Patent Nr. 5,918,223 offenbart ein Verfahren für die Inhalts-basierte Analyse, Speicherung, Wiedergewinnung und Segmentierung von Audioinformationen. Eine Analyse von Audiodaten erzeugt einen Satz von numerischen Werten, der auch als Merkmalsvektor bezeichnet wird, und der dazu verwendet werden kann, um die Ähnlichkeit zwischen einzelnen Audiostücken, die typischerweise in einer Multimediadatenbank oder im World Wide Web gespeichert sind, zu klassifizieren und rangmäßig zu ordnen.

Die Analyse ermöglicht ferner die Beschreibung von benutzerdefinierten Klassen von Audiostücken basierend auf einer Analyse eines Satzes von Audiostücken, die alle Mitglieder einer Benutzer-definierten Klasse sind. Das System ist in der Lage, einzelne Tonabschnitte innerhalb eines längeren Tonstücks zu finden, was es ermöglicht, daß die Audioaufzeichnung automatisch in eine Serie von kürzeren Audiosegmenten segmentiert wird.

Als Merkmale zur Charakterisierung bzw. Klassifizierung von Audiostücken hinsichtlich ihres Inhalts wird die Lautheit eines Stückes, die Tonhöhe, die Tonhelligkeit ("Brightness"), die Bandbreite und die sogenannten Mel-Frequenz-Cepstral-Koeffizienten (MFCCs) bei periodischen Intervallen in dem Audiostück verwendet. Die Werte pro Block oder Frame werden gespeichert und einer ersten Ableitung unterzogen. Hierauf werden spezifische statistische Größen berechnet, wie z.B. der Mittelwert oder die Standardabweichung, und zwar von jedem dieser Merkmale einschließlich der ersten Ableitungen derselben, um eine Variation über der Zeit zu beschreiben. Dieser Satz von statistischen Größen bildet den Merkmalsvektor. Der Merkmalsvektor des Audiostücks wird in einer Datenbank in Zuordnung zu der Ursprungsdatei gespeichert, wobei ein Benutzer auf die Datenbank zugreifen kann, um entsprechende Audiostücke abzurufen.

Das Datenbanksystem ist in der Lage, den Abstand in einem n-dimensionalen Raum zwischen zwei n-dimensionalen Vektoren zu quantifizieren. Es ist ferner möglich, Klassen von Audiostücken zu erzeugen, indem ein Satz von Audiostücken spezifiziert wird, der in eine Klasse gehört. Beispielsklassen sind Vogelgezwitscher, Rockmusik usw. Der Benutzer wird in die Lage versetzt, die Audiostück-Datenbank unter Verwendung spezifischer Verfahren zu durchsuchen. Das Ergebnis einer Suche ist eine Liste von Tondateien, die geordnet nach ihrem Abstand von dem spezifizierten n-dimensionalen Vektor aufgelistet sind. Der Benutzer kann die Datenbank hinsichtlich Ännlichkeits-Merkmalen, hinsichtlich akustischer bzw. psychoakustischer Merkmale, hinsichtlich subjektiver Merkmale oder hinsichtlich spezieller Geräusche, wie z.B. Bienensummen, durchsuchen.

Die Fachveröffentlichung "Multimedia Content Analysis", Yao Wang u.a., IEEE Signal Processing Magazine, November 2000, Seiten 12 bis 36, offenbart ein ähnliches Konzept, um Multimediastücke zu charakterisieren. Als Merkmale zum Klassifizieren des Inhalts eines Multimediastückes werden Zeitbereichsmerkmale oder Frequenzbereichsmerkmale vorgeschlagen. Diese umfassen die Lautstärke, die Tonhöhe als Grundfrequenz einer Audiosignalform, spektrale Merkmale, wie z. B. der Energieinhalt eines Bandes bezogen auf den Gesamtenergiegehalt, Grenzfrequenzen im Spektralverlauf etc. Neben Kurzzeitmerkmalen, die die genannten Größen pro Block von Abtastwerten des Audiosignals betreffen, werden auch Langzeitgrößen vorgeschlagen, die sich auf einen längeren Zeitraum des Audiostücks beziehen.

Zur Charakterisierung von Audiostücken werden verschiedene Kategorien vorgeschlagen, wie z.B. Tiergeräusche, Glockengeräusche, Geräusche einer Menschenmenge, Gelächter, Maschinengeräusche, Musikinstrumente, männliche Sprache, weibliche Sprache, Telefongeräusche oder Wassergeräusche.

Problematisch bei der Auswahl der verwendeten Merkmale ist, daß der Rechenaufwand zum Extrahieren eines Merkmals moderat sein soll, um eine zügige Charakterisierung zu erreichen, daß jedoch gleichzeitig das Merkmal für das Audiostück charakteristisch sein soll, derart, daß zwei unterschiedliche Stücke auch voneinander unterscheidbare Merkmale aufweisen.

Das US-Patent Nr. 5 210 820 offenbart ein recheneffizientes statistisches Verfahren zur Indexierung und Charakterisierung von Audiostücken.

Weiterhin problematisch ist die Robustheit des Merkmals. So wird bei den genannten Konzepten nicht auf Robustheitskriterien eingegangen. Wird ein Audiostück unmittelbar nach seiner Generierung im Tonstudio charakterisiert und mit einem Index versehen, der den Merkmalsvektor des Stücks darstellt und gewissermaßen die Essenz des Stücks bildet, so ist die Wahrscheinlichkeit relativ hoch, dieses Stück wiederzuerkennen, wenn dieselbe, unverzerrte Version dieses Stückes demselben Verfahren unterzogen wird, also dieselben Merkmale extrahiert werden und der Merkmalsvektor dann in der Datenbank mit einer Vielzahl von Merkmalsvektoren verschiedener Stücke verglichen wird.

Problematisch wird es jedoch dann, wenn ein Audiostück vor seiner Charakterisierung verzerrt wird, so daß das zu charakterisierende Signal nicht mehr identisch zum ursprünglichen Signal ist, jedoch denselben Inhalt hat. Ein Mensch, der beispielsweise ein Lied kennt, wird dieses Lied auch wiedererkennen, wenn es verrauscht ist, wenn es lauter oder leiser ist oder wenn es in einer anderen Tonhöhe gespielt wird als ursprünglich aufgenommen. Eine weitere Verzerrung könnte beispielsweise durch eine verlustbehaftete Datenkompression erreicht worden sein, beispielsweise mittels eines Codierverfahrens gemäß einem MPEG-Standard, wie z.B. MP3 oder AAC.

Führt eine Verzerrung bzw. Datenkompression dazu, daß das Merkmal durch die Verzerrung bzw. Datenkompression ebenfalls stark beeinträchtigt wird, würde dies bedeuten, daß die Essenz verloren geht, während der Inhalt des Stücks für einen Menschen immer noch erkennbar ist.

Die Aufgabe der vorliegenden Erfindung besteht darin, ein Konzept zu schaffen, damit die Robustheit und Recheneffizienz verbessert werden.

Diese Aufgabe wird durch ein Verfahren zum Charakterisieren eines Signals nach Patentanspruch 1, durch ein Verfahren zum Erzeugen eines indexierten Signals nach Patentanspruch 18, durch eine Vorrichtung zum Charakterisieren eines Signals nach Patentanspruch 21 oder durch eine Vorrichtung zum Erzeugen eines indexierten Signals nach Patentanspruch 22 gelöst.

Bei der Auswahl des Merkmals zum Charakterisieren bzw. Indexieren eines Signals sollte erfindungsgemäß besonders auf die Robustheit gegenüber Verzerrungen des Signals geachtet werden muß. Die Nützlichkeit von Merkmalen bzw. Merkmalskombinationen hängt davon ab, wie stark sie durch irrelevante Veränderungen, wie z. B. durch eine MP3-Codierung, verändert werden.

Als Merkmal zum Charakterisieren bzw. Indexieren von Signalen wird die Tonalität des Signals verwendet. Es hat sich herausgestellt, daß die Tonalität eines Signals, d. h. die Eigenschaft eines Signals, ein eher unflaches Spektrum mit ausgeprägten Linien oder eher ein Spektrum mit gleich hohen Linien zu haben, robust gegenüber Verzerrungen üblicher Art ist, wie z.B. Verzerrungen durch ein verlustbehaftetes Codierverfahren, wie z.B. MP3. Als Essenz des Signals wird gewissermaßen sein spektrales Erscheinungsbild genommen, und zwar bezogen auf die einzelnen Spektrallinien bzw. Gruppen von Spektrallinien. Die Tonalität liefert ferner eine hohe Flexibilität hinsichtlich des zu betreibenden Rechenaufwands, um das Tonalitätsmaß zu bestimmen. Das Tonalitätsmaß kann aus der Tonalität sämtlicher Spektralkomponenten eines Stücks abgeleitet werden, oder aber aus der Tonalität von Gruppen von Spektralkomponenten, usw. Darüber hinaus können Tonalitäten von aufeinander folgenden Kurzzeitspektren des untersuchten Signals entweder einzeln oder gewichtet oder statistisch ausgewertet verwendet werden.

Die Tonalität, d. h. die Rausch- bzw. Tonartigkeit eines Signals, ist eine vom Inhalt des Audiosignals abhängige Größe, die weitestgehend unbeeinflußt von verschiedenen Verzerrungsarten ist. Ein auf einem Tonalitätsmaß aufbauendes Konzept zum Charakterisieren bzw. Indexieren von Signalen liefert daher eine robuste Wiedererkennung, was sich dahingehend äußert, daß die Tonalitäts-Essenz eines Signals nicht bis zur Unkenntlichkeit verändert wird, wenn das Signal verzerrt wird.

Eine Verzerrung ist beispielsweise eine Übertragung des Signals von einem Lautsprecher über einen Luftübertragungskanal zu einem Mikrofon.

Bedeutsam ist die Robustheitseigenschaft des Tonalitätsmerkmals im Hinblick auf verlustbehaftete Kompressionsverfahren. Es hat sich herausgestellt, daß das Tonalitätsmaß eines Signals durch eine verlustbehaftete Datenkompression wie beispielsweise nach einem der MPEG-Standards nicht oder nur kaum beeinflußt wird. Darüber hinaus liefert ein Erkennungsmerkmal auf der Basis der Tonalität des Signals eine ausreichend gute Essenz für das Signal, so daß zwei voneinander unterschiedliche Audiosignale auch ausreichend unterschiedliche Tonalitätsmaße liefern. Der Inhalt des Audiosignals ist somit stark mit dem Tonalitätsmaß korreliert.

Ein Vorteil der Erfindung besteht somit darin, daß das Tonalitätsmaß des Signals gegenüber gestörten, d. h. verzerrten, Signalen robust ist. Diese Robustheit besteht insbesondere gegenüber einer Filterung, d. h. Equalisierung, Dynamikkompression, einer verlustbehafteten Datenreduktion, wie z.B. MPEG-1/2 Layer 3, einer analogen Übertragung, etc. Darüber hinaus liefert die Tonalitätseigenschaft eines Signals eine hohe Korrelation zum Inhalt des Signals.

Der Erfindung liegt ferner die Erkenntnis zugrunde, daß das Maß für die Tonalität eines Signals besonders robust und mit niedrigem Rechenaufwand ermittelt werden kann, wenn das Maß für die Tonalität von einem Quotienten abgeleitet ist, der im Zähler einen Mittelwert aus mit einer ersten Potenz potenzierten Spektralkomponenten des Signals aufweist, und der im Nenner einen Mittelwert aus mit einer zweiten Potenz potenzierten Spektralkomponenten aufweist, wobei die erste und die zweite Potenz unterschiedlich sind. Die Mittelwertbildung geschieht dadurch, daß mehrere Spektralkomponenten im Zähler zunächst für sich mit der ersten Potenz potenziert werden, dann aufsummiert werden, dann durch die Anzahl der Spektralkomponenten geteilt werden, und dann schließlich einer Wurzelbildung unterzogen werden, wobei die Ordnung der Wurzel der Potenz entspricht. Die selbe Mittelwertbildung wird im Nenner durchgeführt, jedoch mit einer anderen Potenz.

Dadurch, daß lediglich Quadrate, dritte Potenzen, vierte Potenzen bzw. n-te Potenzen gebildet werden müssen, und diese potenzierten Spektralkomponenten dann aufsummiert werden, werden Probleme vermieden, die auftreten, wenn reine Produkte berechnet werden. Um bei großen Produkten im numerisch verfügbaren Zahlenraum zu bleiben, werden Logarithmen gebildet, die Logarithmen aufsummiert, und dann die erhaltene Summe potenziert. Dies ist aufwendig und wird bei den erfindungsgemäßen Tonalitätsmerkmalen vermieden.

Andererseits sind Multiplikationen von Spektralkomponenten bzw. von potenzierten Spektralkomponenten dahin gehend wenig robust, daß unabhängig von dem Wert der einzelnen Spektralkomponenten das Produkt aus mehreren Spektralkomponenten oder potenzierten Spektralkomponenten gleich 0 oder sehr klein wird, wenn eine einzige Spektralkomponente gleich 0 ist oder sehr klein ist.

Andererseits wird dadurch, daß die Potenz im Zähler und die Potenz im Nenner unterschiedlich sind, erreicht, daß flache Spektren, also relativ gering tonale Signale einen Quotienten gleich 1 oder nahe bei 1 liefern, während zerklüftete Spektren, also eher tonale Spektren einen Quotienten liefern, der entweder größer als 1 ist, wenn die Potenz im Zähler größer als die Potenz im Nenner wird, oder der kleiner als 1 ist, wenn die Potenz im Nenner größer als die Potenz im Zähler des Quotienten ist, bzw. allgemein gesagt von "1" unterschiedlich ist.

Darüber hinaus hat sich herausgestellt, daß der Quotient, von dem das Maß für die Tonalität entweder direkt abgeleitet ist, oder durch Mittelwertbildung oder Varianzberechnung über mehrere entweder lückenlos oder lückenhaft zeitlich aufeinanderfolgende Blöcke oder Frequenzbänder eine hohe Robustheit insbesondere gegenüber begrenzten Signalveränderungen aufweist. Beispielhafte begrenzte Signalveränderungen sind die Änderung der Signalabtastrate. Anschaulich dargestellt ist eine Änderung der Signalabtastrate gegeben, wenn z.B. eine Schallplatte oder ein Tonband etwas schneller oder langsamer abgespielt wird. Da ferner ein Tonalitätsmaß ohne Verwendung eines Produktes berechnet wird, kann das Tonalitätsmaß nicht beabsichtigt oder unbeabsichtigt manipuliert werden, indem z.B. eine einzige Spektralkomponente gleich 0 gesetzt wird, derart, daß unabhängig von dem restlichen Spektralverlauf das Produkt, in dem die zu 0 gesetzte Spektralkomponente auftaucht, ebenfalls gleich 0 ist. Dies könnte darin resultieren, daß die Erkennungsleistung eines Systems, das auf einem Tonalitätsmaß basiert, aufgrund großer Abweichungen stark zurückgeht.

Bevorzugte Ausführungsbeispiele der vorliegenden Erfindung werden nachfolgend bezugnehmend auf die beiliegenden Zeichnungen detailliert erläutert. Es zeigen:

Fig. 1    ein Prinzipblockschaltbild einer Vorrichtung zum Charakterisieren eines Signals;

Fig. 2    ein Prinzipblockschaltbild einer Vorrichtung zum Indexieren eines Signals;

Fig. 3    ein Prinzipblockschaltbild einer Vorrichtung zum Berechnen des Tonalitätsmaßes aus der Tonalität pro Spektralkomponente;

Fig. 4    ein Prinzipblockschaltbild zum Bestimmen des Tonalitätsmaßes aus der Spectral Flatness Measure (SFM); und

Fig. 5    ein Prinzipblockschaltbild eines Mustererkennungssystems, in dem das Tonalitätsmaß als Merkmal (Feature) verwendet werden kann.

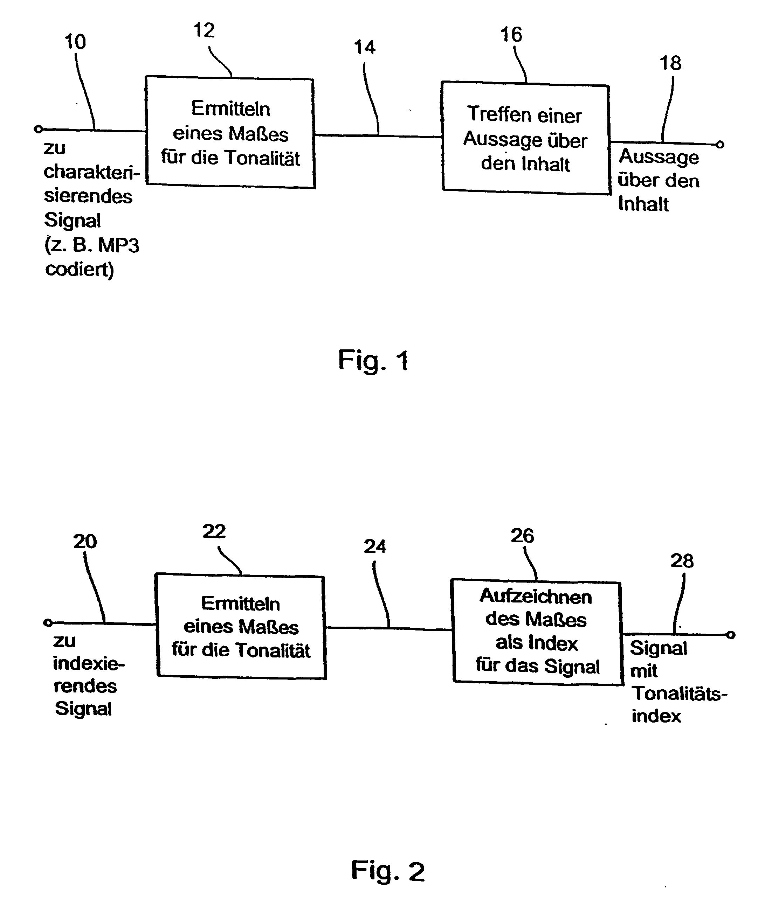

Fig. 1 zeigt ein Prinzipblockschaltbild einer Vorrichtung zum Charakterisieren eines Signals, das einen Audioinhalt darstellt. Die Vorrichtung umfaßt einen Eingang 10, in dem das zu charakterisierende Signal eingegeben werden kann, wobei das zu charakterisierende Signal gegenüber einem ursprünglichen Signal beispielsweise einer verlustbehafteten Audiocodierung unterzogen worden ist. Das zu charakterisierende Signal wird in eine Einrichtung 12 zum Ermitteln eines Maßes für die Tonalität des Signals eingespeist. Das Maß für die Tonalität für das Signal wird über eine Verbindungsleitung 14 einer Einrichtung 16 zum Treffen einer Aussage über den Inhalt des Signals zugeführt. Die Einrichtung 16 ist ausgebildet, um diese Aussage aufgrund des von der Einrichtung 12 übermittelten Maßes für die Tonalität des Signals zu treffen und liefert diese Aussage über den Inhalt des Signals an einem Ausgang 18 des Systems.

Fig. 2 zeigt eine Vorrichtung zum Erzeugen eines indexierten Signals, das einen Audioinhalt aufweist. Das Signal, beispielsweise ein Audiostück, wie es im Tonstudio erzeugt worden ist und auf einer Compact Disc gespeichert ist, wird über einen Eingang 20 in die in Fig. 2 gezeigte Vorrichtung eingespeist. Eine Einrichtung 22, die grundsätzlich genauso wie die Einrichtung 12 von Fig. 12 aufgebaut sein kann, ermittelt ein Maß für die Tonalität des zu indexierenden Signals und liefert dieses Maß über eine Verbindungsleitung 24 zu einer Einrichtung 26 zum Aufzeichnen des Maßes als Index für das Signal. An einem Ausgang der Einrichtung 26, der gleichzeitig der Ausgang 28 der in Fig. 2 gezeigten Vorrichtung zum Erzeugen eines indexierten Signals ist, kann dann das am Eingang 20 eingespeiste Signal zusammen mit einem Tonalitätsindex ausgegeben werden. Alternativ könnte die in Fig. 2 gezeigte Vorrichtung so ausgestaltet sein, daß an dem Ausgang 28 ein Tabelleneintrag erzeugt wird, der den Tonalitätsindex mit einer Identifikationsmarke verknüpft, wobei die Identifikationsmarke dem zu indexierenden Signal eindeutig zugeordnet ist. Allgemein liefert die in Fig. 2 gezeigte Vorrichtung einen Index für das Signal, wobei der Index dem Signal zugeordnet ist und auf den Audioinhalt des Signals hinweist.

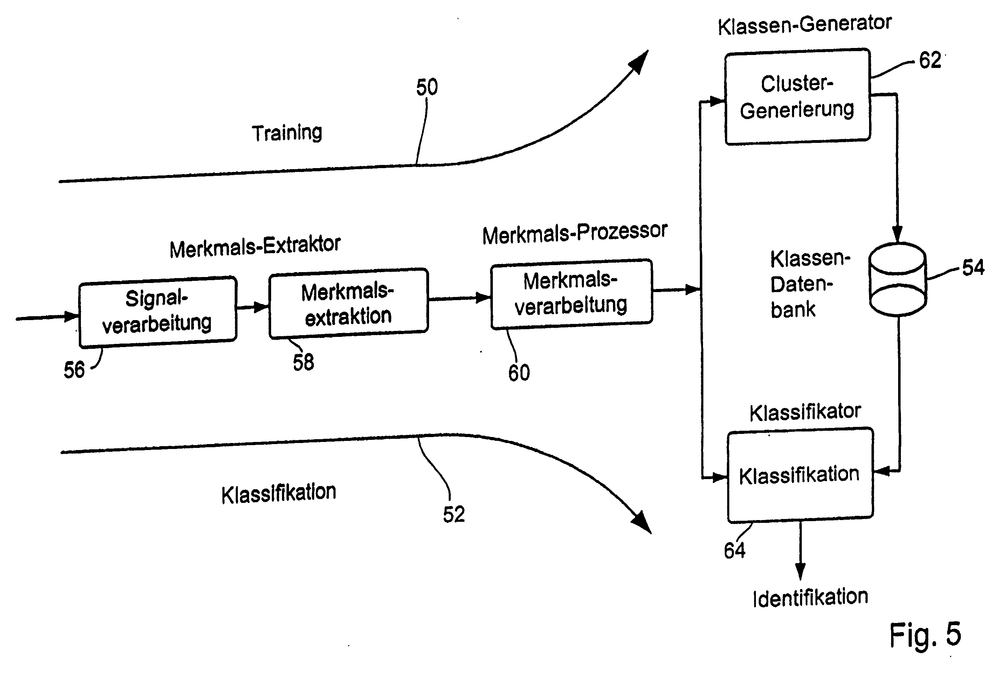

Wenn eine Vielzahl von Signalen durch die in Fig. 2 gezeigte Vorrichtung verarbeitet wird, entsteht nach und nach eine Datenbank aus Indizes für Audiostücke, die beispielsweise für das in Fig. 5 skizzierte Mustererkennungssystem verwendet werden kann. Die Datenbank enthält neben den Indizes optional die Audiostücke selbst. Damit können die Stücke hinsichtlich ihrer Tonalitätseigenschaften ohne weiteres durchsucht werden, um ein Stück durch die in Fig. 1 gezeigte Vorrichtung zu identifizieren und zu klassifizieren, und zwar hinsichtlich der Tonalitätseigenschaft bzw. hinsichtlich von Ähnlichkeiten zu anderen Stücken bzw. Abständen zwischen zwei Stücken. Allgemein liefert die in Fig. 2 gezeigte Vorrichtung jedoch eine Möglichkeit zur Erzeugung von Stücken mit einer zugehörigen Meta-Beschreibung, d. h. dem Tonalitätsindex. Daher ist es möglich, Datensätze z.B. nach vorgegebenen Tonalitätsindizes zu indexieren und zu durchsuchen, so daß gemäß der vorliegenden Erfindung gewissermaßen ein effizientes Suchen und Auffinden von Multimediastücken möglich ist.

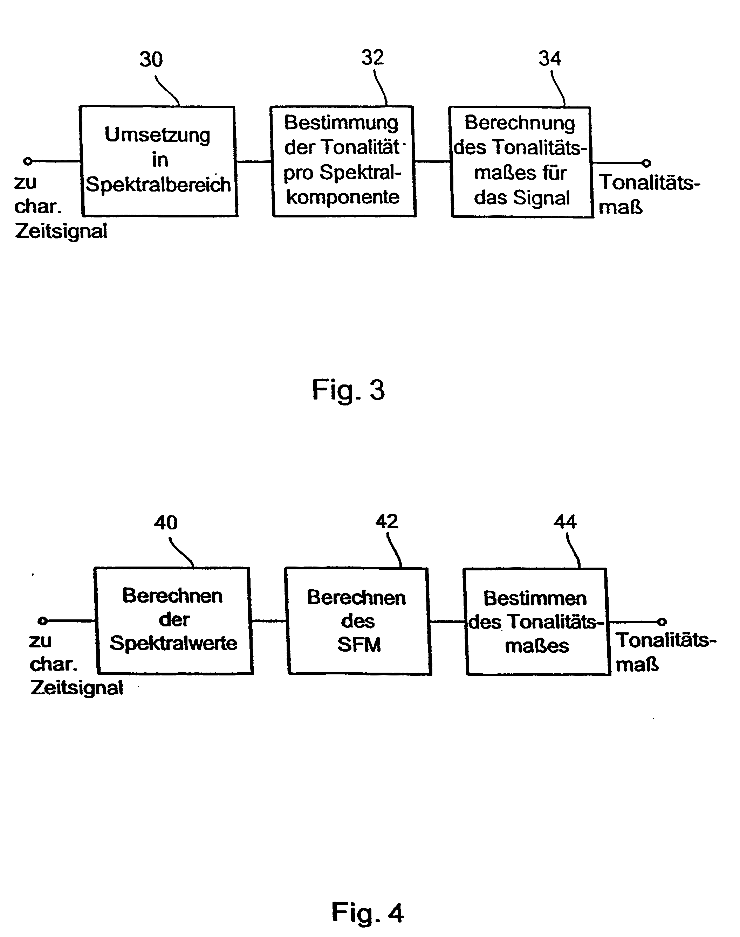

Zur Berechnung des Tonalitätsmaßes eines Stückes können verschiedene Verfahren angewendet werden. Wie es in Fig. 3 gezeigt ist, kann ein zu charakterisierendes Zeitsignal mittels einer Einrichtung 30 in den Spektralbereich umgesetzt werden, um aus einem Block von zeitlichen Abtastwerten einen Block von Spektralkoeffizienten zu erzeugen. Wie später ausgeführt wird, kann für jeden Spektralkoeffizienten bzw. für jede Spektralkomponente ein eigener Tonalitätswert bestimmt werden, um beispielsweise mittels einer Ja/Nein-Bestimmung zu klassifizieren, ob eine Spektralkomponente tonal ist oder nicht. Unter Verwendung der Tonalitätswerte für die Spektralkomponenten und der Energie bzw. Leistung der Spektralkomponenten, wobei die Tonalitätswerte durch die Einrichtung 32 bestimmt werden, kann dann mittels einer Einrichtung 34 das Tonalitätsmaß für das Signal auf eine Vielzahl von verschiedenen Arten berechnet werden.

Aufgrund der Tatsache, daß beispielsweise durch das in Fig. 3 beschriebene Konzept ein quantitatives Tonalitätsmaß erhalten wird, ist es auch möglich, Abstände bzw. Ähnlichkeiten zwischen zwei Tonalitäts-indexierten Stücken anzugeben, wobei Stücke als ähnlich klassifiziert werden können, wenn ihre Tonalitätsmaße sich nur über eine Differenz kleiner als eine vorbestimmte Schwelle unterscheiden, während andere Stücke als unähnlich klassifiziert werden können, wenn sich ihre Tonalitätsindizes durch eine Differenz unterscheiden, die größer als eine Unähnlichkeitsschwelle ist. Neben der Differenz zwischen zwei Tonalitätsmaßen können zur Bestimmung des Tonalitätsabstandes zwischen zwei Stücken weitere Größen verwendet werden, wie z. B. die Differenz zwischen zwei Absolutwerten, das Quadrat einer Differenz, der Quotient zwischen zwei Tonalitätsmaßen weniger Eins, die Korrelation zwischen zwei Tonalitätsmaßen, die Distanzmetrik zwischen zwei Tonalitätsmaßen, die n-dimensionale Vektoren sind, etc.

Es sei darauf hingewiesen, daß das zu charakterisierende Signal nicht unbedingt ein Zeitsignal sein muß, sondern daß dasselbe auch ein beispielsweise MP3-codiertes Signal sein kann, das aus einer Folge von Huffman-Codewörtern besteht, die aus quantisierten Spektralwerten erzeugt worden sind.

Die quantisierten Spektralwerte wurden aus den ursprünglichen Spektralwerten durch Quantisierung erzeugt, wobei die Quantisierung derart gewählt wurde, daß das durch die Quantisierung eingeführte Quantisierungsrauschen unterhalb der psychoakustischen Maskierungsschwelle liegt. In einem solchen Fall kann, wie es beispielsweise anhand von Fig. 4 dargestellt ist, direkt der codierte MP3-Datenstrom verwendet werden, um beispielsweise mittels einer MP3-Decodierers die Spektralwerte zu berechnen (Einrichtung 40 in Fig. 4). Es ist nicht nötig, vor der Bestimmung der Tonalität eine Umsetzung in den Zeitbereich und dann wieder eine Umsetzung in den Spektralbereich vorzunehmen, sondern es können die innerhalb des MP3-Decodierers berechneten Spektralwerte unmittelbar genommen werden, um die Tonalität pro Spektralkomponente oder, wie es in Fig. 4 gezeigt ist, das SFM (SFM = Spectral Flatness Measure = Maß für die spektrale Flachheit) durch die Einrichtung 42 zu berechnen. Wenn zur Bestimmung der Tonalität daher Spektralkomponenten verwendet werden, und wenn das zu charakterisierende Signal ein MP3-Datenstrom ist, so ist die Einrichtung 40 wie ein Decodierer aufgebaut, jedoch ohne die inverse Filterbank.

Das Maß für die spektrale Flachheit (SFM) wird durch folgende Gleichung berechnet.

$$SFM = \frac{\left[\prod_{n=0}^{N-1} X(n)\right]^{\frac{1}{N}}}{\frac{1}{N}\sum_{n=0}^{N-1} X(n)}$$

In dieser Gleichung steht X(n) für das Betragsquadrat einer Spektralkomponente mit dem Index n, während N für die Gesamtanzahl der Spektralkoeffizienten eines Spektrums steht. Aus der Gleichung ist zu sehen, daß das SFM gleich dem Quotienten aus dem geometrischen Mittel der Spektralkomponenten zum arithmetischen Mittel der Spektralkomponenten ist. Wie bekannt ist, ist das geometrische Mittel immer kleiner oder höchstens gleich dem arithmetischen Mittel, so daß das SFM einen Wertebereich hat, der zwischen 0 und 1 liegt. Dabei deutet ein Wert nahe 0 auf ein tonales Signal und ein Wert nahe 1 auf ein eher rauschartiges Signal mit einem flachen Spektralverlauf hin. Es sei darauf hingewiesen, daß das arithmetische Mittel und das geometrische Mittel nur gleich sind, wenn alle X(n) identisch sind, was einem völlig atonalen, d. h. rauschartigen oder impulsartigen Signal entspricht. Ist dagegen im Extremfall lediglich eine Spektralkomponente betragsmäßig sehr groß, während andere Spektralkomponenten X(n) betragsmäßig sehr klein sind, so wird das SFM einen Wert nahe 0 haben, was auf ein sehr tonales Signal hinweist.

Das SFM ist in "Digital Coding of Waveforms", Englewood Cliffs, NJ, Prentice-Hall, N. Jayant, P. Noll, 1984, beschrieben und wurde ursprünglich als Maß für den maximal zu erreichenden Codiergewinn aus einer Redundanzreduktion definiert.

Aus dem SFM kann dann durch eine Einrichtung 44 zum Bestimmen des Tonalitätsmaßes das Tonalitätsmaß ermittelt werden.

Eine weitere Möglichkeit zum Bestimmen der Tonalität der Spektralwerte, die durch eine Einrichtung 32 von Fig. 3 durchgeführt werden kann, besteht in der Bestimmung von Spitzen im Leistungsdichtespektrum des Audiosignals, wie es in MPEG-1 Audio ISO/IEC 11172-3, Annex D1 "Psychoacoustic Model 1", beschrieben ist. Hierbei wird der Pegel einer Spektralkomponente ermittelt. Daraufhin werden die Pegel von zwei die eine Spektralkomponente umgebenden Spektralkomponenten bestimmt. Eine Klassifizierung der Spektralkomponente als tonal findet dann statt, wenn der Pegel der Spektralkomponente um einen vorbestimmten Faktor größer ist als ein Pegel einer umgebenden Spektralkomponente. Die vorbestimmte Schwelle wird im Stand der Technik als 7dB angenommen, wobei jedoch beliebige andere vorbestimmte Schwellen verwendet werden können. Dadurch kann für jede Spektralkomponente angegeben werden, ob diese tonal ist oder nicht. Das Tonalitätsmaß kann dann durch die Einrichtung 34 von Fig. 3 unter Verwendung der Tonalitätswerte für die einzelnen Komponenten sowie der Energie der Spektralkomponenten angegeben werden.

Eine weitere Möglichkeit zur Bestimmung der Tonalität einer Spektralkomponente besteht in der Auswertung der zeitlichen Prädizierbarkeit, d. h. Vorhersagbarkeit, der Spektralkomponente. Hierbei wird wieder auf MPEG-1 Audio ISO/IEC 11172-3, Annex D2 "Psychoacoustic Model 2", verwiesen. Allgemein wird ein aktueller Block von Abtastwerten des zu charakterisierenden Signals in eine spektrale Darstellung umgesetzt, um einen aktuellen Block von Spektralkomponenten zu erhalten. Hierauf werden die Spektralkomponenten des aktuellen Blocks von Spektralkomponenten unter Verwendung von Informationen aus Abtastwerten des zu charakterisierenden Signals, die dem aktuellen Block vorausgehen, also unter Verwendung von Vergangenheitsinformationen, prädiziert. Daraufhin wird ein Prädiktionsfehler bestimmt, aus dem dann ein Tonalitätsmaß abgeleitet werden kann.

Eine weitere Möglichkeit zur Bestimmung der Tonalität ist in dem US-Patent Nr. 5,918,203 beschrieben. Wieder wird eine positive reellwertige Darstellung des Spektrums des zu charakterisierenden Signals verwendet. Diese Darstellung kann die Beträge, die Betragsquadrate etc. der Spektralkomponten umfassen. Bei einem Ausführungsbeispiel werden die Beträge oder Betragsquadrate der Spektralkomponenten zunächst logarithmisch komprimiert und dann mit einem Filter mit differenzierender Charakteristik gefiltert, um einen Block von differenzierend gefilterten Spektralkomponenten zu erhalten.

Bei einem anderen Ausführungsbeispiel werden die Beträge der Spektralkomponenten zunächst mit einem Filter mit differenzierender Charakteristik gefiltert, um einen Zähler zu erhalten, und dann mit einem Filter mit integrierender Charakteristik gefiltert, um einen Nenner zu erhalten. Der Quotient aus einem differenzierend gefilterten Betrag einer Spektralkomponente und dem integrierend gefilterten Betrag derselben Spektralkomponente ergibt dann den Tonalitätswert für diese Spektralkomponente.

Durch diese beiden Vorgehensweisen werden langsame Änderungen zwischen benachbarten Beträgen von Spektralkomponenten unterdrückt, während abrupte Änderungen zwischen benachbarten Beträgen von Spektralkomponenten im Spektrum hervorgehoben werden. Langsame Änderungen zwischen benachbarten Beträgen von Spektralkomponenten deuten auf atonale Signalkomponenten hin, während abrupte Änderungen auf tonale Signalkomponenten hinweisen. Die logarithmisch komprimierten und differenzierend gefilterten Spektralkomponenten bzw. die Quotienten können dann wiederum dazu verwendet werden, um ein Tonalitätsmaß für das betrachtete Spektrum zu berechnen.

Obgleich im vorherigen Text davon gesprochen wurde, daß ein Tonalitätswert pro Spektralkomponente berechnet wird, wird es im Hinblick auf einen geringeren Rechenaufwand bevorzugt, beispielsweise immer die Betragsquadrate zweier benachbarter Spektralkomponenten zu addieren und dann für jedes Ergebnis der Addition einen Tonalitätswert durch eines der genannten Verfahren zu berechnen. Jede Art einer additiven Gruppierung von Betragsquadraten bzw. Beträgen von Spektralkomponenten kann verwendet werden, um Tonalitätswerte für mehr als eine Spektralkomponente zu berechnen.

Eine weitere Möglichkeit zur Bestimmung der Tonalität einer Spektralkomponente besteht darin, den Pegel einer Spektralkomponente mit einem Mittelwert von Pegeln von Spektralkomponenten in einem Frequenzband zu vergleichen. Die Breite des Frequenzbands, in dem die eine Spektralkomponente liegt, deren Pegel mit dem Mittelwert z. B. der Beträge oder Betragsquadrate der Spektralkomponenten verglichen wird, kann je nach Anforderung gewählt werden. Eine Möglichkeit besteht beispielsweise darin, daß das Band schmal gewählt wird. Alternativ könnte das Band auch breit gewählt werden, oder auch nach psychoakustischen Gesichtspunkten. Dadurch kann der Einfluß kurzzeitiger Leistungseinbrüche im Spektrum vermindert werden.

Obgleich im vorhergehenden die Tonalität eines Audiosignals anhand seiner Spektralkomponenten bestimmt wurde, kann dies auch im Zeitbereich, also unter Verwendung der Abtastwerte des Audiosignals geschehen. Hierzu könnte eine LPC-Analyse des Signals durchgeführt werden, um einen Prädiktionsgewinn für das Signal abzuschätzen. Der Prädiktionsgewinn ist umgekehrt proportional zu dem SFM und ist ebenfalls ein Maß für die Tonalität des Audiosignals.

Bei einem bevorzugten Ausführungsbeispiel wird nicht nur ein Wert pro Kurzzeitspektrum angegeben, sondern das Tonalitätsmaß ist ein mehrdimensionaler Vektor von Tonalitätswerten. So kann beispielsweise das Kurzzeitspektrum in vier aneinander angrenzende und vorzugsweise nicht überlappende Bereiche bzw. Frequenzbänder aufgeteilt werden, wobei für jedes Frequenzband ein Tonalitätswert beispielsweise durch die Einrichtung 34 von Fig. 3 oder durch die Einrichtung 44 von Fig. 4 ermittelt wird. Damit wird für ein Kurzzeitspektrum des zu charakterisierenden Signals ein 4-dimensionaler Tonalitätsvektor erhalten. Um eine bessere Charakterisierung zu erlauben, würde es ferner bevorzugt, beispielsweise vier aufeinanderfolgende Kurzzeitspektren wie oben beschrieben zu bearbeiten, so daß sich insgesamt ein Tonalitätsmaß ergibt, das ein 16-dimensionaler Vektor oder allgemein ein n x m-dimensionaler Vektor ist, wobei n für die Anzahl der Tonalitätskomponenten pro Frame oder Block von Abtastwerten steht, während m für die Anzahl von betrachteten Blöcken bzw. Kurzzeitspektren steht. Das Tonalitätsmaß wäre dann, wie ausgeführt, ein 16-dimensionaler Vektor. Um den zeitlichen Verlauf des zu charakterisierenden Signals besser zu berücksichtigen, wird es ferner bevorzugt, mehrere derartige beispielsweise 16-dimensionale Vektoren zu errechnen und dann statistisch zu verarbeiten, um beispielsweise Varianz, Mittelwert oder Zentralmomente höherer Ordnung aus sämtlichen n x m-dimensionalen Tonalitätsvektoren eines Stücks mit einer bestimmten Länge zu berechnen, um dieses Stück dadurch zu indexieren.

Allgemein gesagt kann die Tonalität somit aus Teilen des gesamten Spektrums berechnet werden. Damit ist es möglich, die Tonalität/Rauschartigkeit eines Teilspektrums bzw. mehrerer Teilspektren zu bestimmen und somit eine feinere Charakterisierung des Spektrums und somit des Audiosignals zu erzielen.

Ferner können Kurzzeitstatistiken aus Tonalitätswerten, wie z.B. Mittelwert, Varianz und Zentralmomente höherer Ordnung, als Tonalitätsmaß berechnet werden. Diese werden mittels statistischer Techniken anhand einer zeitlichen Folge von Tonalitätswerten bzw. Tonalitätsvektoren ermittelt und liefern damit eine Essenz über einen längeren Abschnitt eines Stückes.

Darüber hinaus können auch Differenzen von zeitlich aufeinanderfolgenden Tonalitätsvektoren oder linear gefilterte Tonalitätswerte verwendet werden, wobei als lineare Filter beispielsweise IIR-Filter oder FIR-Filter eingesetzt werden können.

Auch bei der Berechnung des SFM (Block 42 in Fig. 4) wird es aus Rechenzeitersparnisgründen bevorzugt, beispielsweise zwei frequenzmäßig benachbarte Betragsquadrate zu addieren oder zu mitteln und die SFM-Berechnung auf dieser vergröberten positiven und reellwertigen Spektraldarstellung durchzuführen. Dies führt ferner zu einer größeren Robustheit gegenüber schmalbandigen Frequenzeinbrüchen sowie zu einem geringeren Rechenaufwand.

Im nachfolgenden wird auf Fig. 5 eingegangen, die eine schematische Übersicht über ein Mustererkennungssystem zeigt, bei dem die vorliegende Erfindung vorteilhaft eingesetzt werden kann. Prinzipiell unterscheidet man bei einem in Fig. 5 gezeigten Mustererkennungssystem zwischen zwei Betriebsmodi, nämlich dem Trainingsmodus 50 und dem Klassifikationsmodus 52.

In dem Trainings-Modus werden Daten "eintrainiert", d. h. dem System zugefügt und anschließend in einer Datenbank 54 aufgenommen.

Im Klassifikations-Modus wird versucht, ein zu charakterisierendes Signal mit den in der Datenbank 54 vorhandenen Einträgen zu vergleichen und zu ordnen. Die in Fig. 1 gezeigte erfindungsgemäße Vorrichtung kann im Klassifikationsmodus 52 verwendet werden, wenn Tonalitätsindizes anderer Stücke vorliegen, mit denen der Tonali-

EP 1 407 446 B1

tätsindex des aktuellen Stücks verglichen werden kann, um eine Aussage über das Stück zu treffen. Die in Fig. 2 gezeigte Vorrichtung wird dagegen vorteilhaft im Trainings-Modus 50 von Fig. 5 eingesetzt, um die Datenbank nach und nach zu füllen.

Das Mustererkennungssystem umfaßt eine Einrichtung 56 zur Signalvorverarbeitung, eine nachgeschaltete Einrichtung 58 zur Merkmalsextraktion, eine Einrichtung 60 zur Merkmalsverarbeitung, eine Einrichtung 62 für eine Cluster-Generierung, und eine Einrichtung 64 zum Durchführen einer Klassifikation, um beispielsweise als Ergebnis des Klassifikations-Modus 52 eine solche Aussage über den Inhalt des zu charakterisierenden Signals zu treffen, daß das Signal mit dem Signal xy, das in einem früheren Trainings-Modus eintrainiert worden ist, identisch ist.

Im nachfolgenden wird auf die Funktionalität der einzelnen Blöcke von Fig. 5 eingegangen.

Der Block 56 bildet zusammen mit dem Block 58 einen Merkmals-Extraktor, während der Block 60 einen Merkmalsprozessor darstellt. Der Block 56 setzt ein Eingangssignal auf ein einheitliches Zielformat um, wie z. B. die Anzahl der Kanäle, die Abtastrate, die Auflösung (in Bits pro Abtastwert) usw. Dies ist insofern sinnvoll und notwendig, da keine Voraussetzungen über die Quelle, aus der das Eingangssignal stammt, gemacht werden sollte.

Die Einrichtung 58 zur Merkmalsextraktion dient dazu, die üblicherweise große Informationsmenge am Ausgang der Einrichtung 56 auf eine kleine Informationsmenge einzuschränken. Die zu untersuchenden Signale haben meist eine hohe Datenrate, also eine hohe Anzahl von Abtastwerten pro Zeitabschnitt. Die Einschränkung auf eine kleine Informationsmenge muß so stattfinden, daß die Essenz des ursprünglichen Signals, also die Eigenheit desselben, nicht verloren geht. In der Einrichtung 58 werden vorgegebene charakteristische Eigenschaften, wie allgemein beispielsweise Lautheit, Grundfrequenz, usw. und/oder Tonalitätsmerkmale bzw. das SFM, aus dem Signal extrahiert. Die so gewonnenen Tonalitätsmerkmale sollen sozusagen die Essenz des untersuchten Signals beinhalten.

In dem Block 60 können die zuvor errechneten Merkmalsvektoren verarbeitet werden. Eine einfache Verarbeitung besteht in der Normierung der Vektoren. Mögliche Merkmalsverarbeitungen sind lineare Transformationen, wie beispielsweise die Karhunen-Loève-Transformation (KLT) oder die lineare Diskriminanz-Analyse (LDA), die in der Technik bekannt sind. Weitere insbesondere auch nichtlineare Transformationen sind ebenfalls zur Merkmalsverarbeitung anwendbar.

Der Klassengenerator dient dazu, die verarbeiteten Merkmalsvektoren zu Klassen zusammenzufassen. Diese Klassen entsprechen einer kompakten Darstellung des zugehörigen Signals. Der Klassifikator 64 dient schließlich dazu, einen erzeugten Merkmalsvektor einer vordefinierten Klasse bzw. einem vordefinierten Signal zuzuordnen. Die nachfolgende Tabelle stellt eine Übersicht über Erkennungsraten unter verschiedenen Bedingungen dar.

| Art der Verzerrung | Erkennungsrate (Lautheit als Merkmal) | Erkennungsrate (SFM als Merkmal) |
|---|---|---|
| MP3-Codierung, 96kbps, 30s Ausschnitt | 83,9 % | 100 % |
| MP3-Codierung, 96kbps, 15s Ausschnitt | 76,1 % | 74,1 % |

Die Tabelle stellt Erkennungsraten unter Verwendung einer Datenbank (54) von Fig. 5 mit insgesamt 305 Musikstücken dar, von denen jeweils die ersten 180 Sekunden als Referenzdaten eintrainiert wurden. Die Erkennungsrate gibt prozentual die Anzahl der richtig erkannten Stücke in Abhängigkeit des Signaleinflusses an. Die zweite Spalte stellt die Erkennungsrate dar, wenn die Lautheit als Merkmal verwendet wird. Insbesondere wurde die Lautheit in vier Spektralbändern berechnet, dann eine Logarithmierung der Lautheitswerte durchgeführt, und dann eine Differenzbildung von logarithmierten Lautheitswerten für zeitlich aufeinanderfolgende entsprechende Spektralbänder durchgeführt. Das dadurch erhaltene Ergebnis wurde als Merkmalsvektor für die Lautheit verwendet.

In der letzten Spalte wurde das SFM für vier Bänder als Merkmalsvektor verwendet.

Es ist zu sehen, daß die erfindungsgemäße Verwendung der Tonalität als Klassifikationsmerkmal zu einer 100%igen Erkennungsrate von MP-3-codierten Stücken führt, wenn ein Ausschnitt von 30 Sekunden betrachtet wird, während die Erkennungsraten sowohl bei dem erfindungsgemäßen Merkmal als auch bei der Lautheit als Merkmal abnehmen, wenn kürzere Ausschnitte (z. B. 15 s) des zu untersuchenden Signals zur Erkennung verwendet werden.

Wie es bereits ausgeführt worden ist, kann die in Fig. 2 gezeigte Vorrichtung verwendet werden, um das in Fig. 5 gezeigte Erkennungssystem zu trainieren. Allgemein kann jedoch die in Fig. 2 gezeigte Vorrichtung verwendet werden, um für jegliche Multimediadatensätze Metabeschreibungen, d. h. Indizes zu erzeugen, so daß es möglich ist, Datensätze hinsichtlich ihrer Tonalitätswerte zu durchsuchen bzw. aus einer Datenbank Datensätze auszugeben, die einen bestimmten Tonalitätsvektor haben bzw. zu einem bestimmten Tonalitätsvektor ähnlich sind.

Die erfindungsgemäßen Merkmale oder Features, die ein Maß für die Tonalität des Signals entweder direkt oder nach einer bestimmten Verarbeitung liefern, sind folgendermaßen definiert:

$$F_{x,y} = \frac{\sqrt[x]{\frac{1}{N}\sum\limits_{n=0}^{N-1} X(n)^x}}{\sqrt[y]{\frac{1}{N}\sum\limits_{n=0}^{N-1} X(n)^y}}$$

In der obigen Gleichung ist X(n) das diskrete Leistungsdichte-Spektrum, das aus einzelnen Spektralkomponenten besteht, wie es beispielsweise durch die 2N-Punkte diskrete FourierTransformation (DFT) berechnet wird. Die Parameter bzw. Potenzen x und y bestimmen die Charakteristik, mit der hohe Signalspitzen jeweils im Zähler und im Nenner gegenüber kleineren Komponenten hervorgehoben werden. Um einen aussagekräftigen Quotienten $F_{x;y}$ aus dem Summen-Mittelwert im Zähler und dem Summen-Mittelwert im Nenner zu erhalten, müssen die Potenzen x und y unterschiedlich gewählt werden. Für ein flaches Leistungsdichte-Spektrum, d.h. ein "rauschartiges" Signal, ist $F_{x;y}$ = 1. Für tonale Signale ist dagegen $F_{x;y} \geq 1$, wenn x > y gewählt wird. Wenn x < y gewählt wird, ergibt sich für den Quotienten ein Wert $F_{x;y}$ zwischen 0 und 1.

Aufgrund der Tatsache, daß keine reinen Produkte berechnet werden müssen, zeichnen sich die erfindungsgemäßen Merkmale, die durch unterschiedliche Parameter x und y erhalten werden können, durch einen niedrigen Rechenaufwand bei der Extraktion heraus. Dadurch, daß lediglich Quadrate, dritte Potenzen, vierte Potenzen bzw. n-te Potenzen gebildet werden müssen, und diese potenzierten Spektralkomponenten dann aufsummiert werden, werden Probleme vermieden, die auftreten, wenn reine Produkte berechnet werden. Um bei großen Produkten im numerisch verfügbaren Zahlenraum zu bleiben, werden Logarithmen gebildet, die Logarithmen aufsummiert, und dann die erhaltene Summe potenziert. Dies ist aufwendig und wird bei den erfindungsgemäßen Tonalitätsmerkmalen vermieden.

Weiterhin wurde festgestellt, daß die Merkmale eine hohe Robustheit insbesondere auch gegenüber begrenzten Signalveränderungen, wie der Änderung der Signalabtastrate aufweisen. Die Änderung der Signalabtastrate kann beispielsweise dadurch erreicht werden, daß ein Band oder eine Schallplatte etwas schneller oder langsamer eingestellt wird, was zu einer Strekkung bzw. zu einer Stauchung des Spektrums führt.

Es sei darauf hingewiesen, daß die erfindungsgemäßen Merkmale auch frequenzbandweise eingesetzt werden können. Hierzu kann der Spektralraum des Audiosignals in gleich große nicht-überlappende Bänder, oder in zumindest teilweise logarithmisch gewichtete Bänder eingeteilt werden, wobei die logarithmische Gewichtung der Breite der Frequenzbänder insbesondere ab einer unteren Grenzfrequenz zu höheren Frequenzen hin der Einteilung der psychoakustischen Bänder relativ gut entspricht.

Um die Robustheit gegenüber Änderungen der Signalabtastrate weiter zu verbessern, wird es ferner bevorzugt, die Frequenzbandeinteilung des Audiosignals nicht durch nicht-überlappende Bänder vorzunehmen, sondern durch zwischen 5 und 10 % überlappende Bänder. Dies hat den Vorteil, daß dann, wenn eine Spektralkomponente aufgrund einer Abtastratenkonversion in ein anderes Frequenzband fallen würde, wenn keine Überlappung vorhanden wäre, diese Spektralkomponente aufgrund der Überlappung immer noch in das gleiche Frequenzband fällt und nach wie vor zum selben Tonalitätsmaß-Merkmal beiträgt.

Durch geeignete Wahl der Potenzen x und y können verschiedene Spezialfälle erreicht werden, wobei insbesondere der Spezialfall zu nennen ist, bei dem x gleich 2 ist, während y gleich 1 ist. Der erfindungsgemäße Quotient für das Maß der Tonalität entspricht dann den Quotienten aus dem quadratischen Mittelwert (Zähler des Quotienten) und dem arithmetischen Mittelwert (Nenner des Quotienten). Der quadratische Mittelwert ist auch unter der Bezeichnung RMS = "Root Mean Square" für Fachleute bekannt.

Generell sei darauf hingewiesen, daß mit größer werdenden Potenzen sowohl im Zähler als auch im Nenner größere Spektralkomponenten gegenüber kleineren Spektralkomponenten hervorgehoben werden. Je nach Anwendung und erwünschtem Wertebereich für den Wert des Quotienten können unterschiedliche Abstände zwischen der Potenz x des Zählers und der Potenz y des Nenners gewählt werden. Je höher die Differenz zwischen x und y ist, um so größere Werte werden sich für den Quotienten ergeben, wenn x größer als y ist. Eine quantitative Aussage für das Tonalitätsmaß auf der Basis des erfindungsgemäßen Quotienten wird somit die Werte bzw. den Abstand zwischen x und y berücksichtigen müssen.

Schließlich sei darauf hingewiesen, daß das Maß für die Tonalität der erfindungsgemäße Quotient direkt sein kann, wenn eine sehr kennzeichnungskräftige Charakterisierung des Signals erwünscht ist. Um eine kompaktere Darstellung zu erhalten, wird es ferner bevorzugt, den Mittelwert und/oder die Varianz einer Vielzahl von Quotienten von zeitlich aufeinanderfolgenden Blöcken oder einer Vielzahl von entweder zeitlich oder frequenzmäßig aufeinanderfolgenden Frequenzbändern als Maß für die Tonalität des Signals zu verwenden. Wird eine frequenzbandweise Quotientenberechnung durchgeführt, und wird diese frequenzbandweise Quotientenberechnung für eine Mehrzahl zeitlich aufeinanderfolgender Blöcke durchgeführt, so kann eine frequenzbandweise Zusammenfassung der Quotienten über eine Mittelwert- und/oder Varianzbildung erfolgen, so daß das Maß für die Tonalität des Signals eine Aussage über beispielsweise fünf aufeinanderfolgende Blöcke und z.B. zehn Frequenzbänder enthält. Das Maß für die Tonalität ist somit ein Vektor, wobei sich jede Zeile des Vektors auf eine Vielzahl zeitlich aufeinanderfolgender Blöcke bezieht und zwar insbesondere auf ein Frequenzband des Audiosignals für die Vielzahl von zeitlich aufeinanderfolgenden Blöcken.

**Patentansprüche**

1. Verfahren zum Charakterisieren eines Signals, das einen Audioinhalt darstellt, mit folgenden Schritten:

   Ermitteln (12) eines Maßes für eine Tonalität des Signals; und

   Treffen (16) einer Aussage über den Audioinhalt des Signals aufgrund des Maßes für die Tonalität des Signals,

   wobei das Maß für die Tonalität von einem Quotienten $F_{x;y}$ abgeleitet ist, der folgendermaßen definiert ist:

$$F_{x,y} = \frac{\sqrt[x]{\frac{1}{N}\sum_{n=0}^{N-1}X(n)^x}}{\sqrt[y]{\frac{1}{N}\sum_{n=0}^{N-1}X(n)^y}}$$

   wobei X(n) eine Spektralkomponente des Signals bei einem Zählindex n ist, wobei n gleich 0 einen unteren Frequenzindex darstellt, wobei N einen oberen Frequenz darstellt, wobei x die erste Potenz ist, und wobei y die zweite Potenz ist, und wobei die erste und die zweite Potenz unterschiedlich sind.

2. Verfahren nach Anspruch 1, bei dem die erste Potenz (x) größer als die zweite Potenz (y) ist, und bei dem ein Ergebnis des Quotienten größer als "1" auf ein tonales Signal hinweist.

3. Verfahren nach Anspruch 1, bei dem die erste Potenz (x) kleiner als die zweite Potenz (y) ist, und bei dem ein Ergebnis des Quotienten kleiner als "1" und größer als "0" auf ein tonales Signal hinweist.

4. Verfahren nach Anspruch 1 oder 2, bei dem die erste Potenz x gleich 2 ist, und die zweite Potenz y gleich 1 ist, derart, daß der Quotient aus dem quadratischen Mittelwert und dem arithmetischen Mittelwert von Spektralkomponenten des Signals dazu dient, das Maß für die Tonalität abzuleiten.

5. Verfahren nach einem der vorhergehenden Ansprüche, bei dem der Quotient unter Verwendung der gesamten Spektralkomponenten des Signals berechnet wird.

6. Verfahren nach einem der vorhergehenden Ansprüche, bei dem der Quotient unter Verwendung eines Teils der Spektralkomponenten des Signals berechnet wird.

7. Verfahren nach Anspruch 6,
   bei dem zumindest zwei Quotienten für ein Spektrum des Signals berechnet werden, wobei die Quotienten unter Verwendung von zumindest teilweise unterschiedlichen Spektralkomponenten berechnet werden.

8. Verfahren nach einem der vorhergehenden Ansprüche, bei dem der Schritt (16) des Treffens einer Aussage folgende Schritte aufweist:

   Vergleichen (64) des Maßes für die Tonalität des Signals mit einer Mehrzahl von bekannten Tonalitätsmaßen für eine Mehrzahl von bekannten Signalen, die unterschiedliche Audioinhalte darstellen;

   Feststellen, daß der Audioinhalt des zu charakterisierenden Signals mit dem Inhalt eines bekannten Signals übereinstimmt, wenn das Tonalitätsmaß des zu charakterisierenden Signals eine geringere als eine vorbestimmte Abweichung zu dem Tonalitätsmaß hat, das dem bekannten Signal zugeordnet ist.

9. Verfahren nach Anspruch 8, das ferner folgenden Schritt aufweist:

Ausgeben eines Titels, eines Urhebers oder sonstiger Metainformationen für das zu charakterisierende Signal, wenn eine Übereinstimmung festgestellt wird.

10. Verfahren nach einem der vorhergehenden Ansprüche , bei dem das Maß für die Tonalität eine quantitative Größe ist, wobei das Verfahren ferner folgende Schritte aufweist:

Berechnen eines Tonalitäts-Abstandes zwischen dem ermittelten Maß für die Tonalität des Signals und einem bekannten Tonalitätsmaß für ein bekanntes Signal; und

Angeben eines Ähnlichkeitsmaßes für das zu charakterisierende Signal, wobei das Ähnlichkeitsmaß von dem Tonalitätsabstand abhängt und die Ähnlichkeit des Inhalts des bekannten Signals zu dem Inhalt des zu charakterisierenden Signals darstellt.

11. Verfahren nach einem der vorhergehenden Ansprüche,
bei dem das zu charakterisierende Signal durch Codierung aus einem ursprünglichen Signal abgeleitet ist,
wobei die Codierung eine blockweise Umsetzung des ursprünglichen Signals in den Frequenzbereich und eine von einem psychoakustischen Modell gesteuerte Quantisierung von Spektralwerten des ursprünglichen Signals aufweist.

12. Verfahren nach einem der vorhergehenden Ansprüche ,
bei dem das zu charakterisierende Signal durch Ausgabe eines ursprünglichen Signals mittels eines Lautsprechers und durch Aufnahme mittels eines Mikrofons bereitgestellt wird.

13. Verfahren nach einem der vorhergehenden Ansprüche,
bei dem das zu charakterisierende Signal als Nebeninformation ein Maß für die Tonalität aufweist, und
bei dem der Schritt des Ermittelns (12) das Lesen des Maßes für die Tonalität aus den Nebeninformationen aufweist.

14. Verfahren nach einem der vorhergehenden Ansprüche, bei dem zumindest zwei frequenzmäßig benachbarte Spektralkomponenten gruppiert werden, wobei daraufhin nicht die einzelnen Spektralkomponenten, sondern die gruppierten Spektralkomponenten weiterverarbeitet werden.

15. Verfahren nach einem der vorhergehenden Ansprüche,
bei dem im Schritt (12) des Ermittelns ein Kurzzeitspektrum des zu charakterisierenden Signals in n Bänder aufgeteilt wird, wobei für jedes Band ein Tonalitätswert ermittelt wird,
bei dem ferner für m aufeinanderfolgende Kurzzeitspektren des zu charakterisierenden Signals jeweils n Tonalitätswerte bestimmt werden, und
bei dem ein Tonalitätsvektor mit einer Dimension gebildet wird, die gleich m x n ist, wobei m und n größer oder gleich 1 sind.

16. Verfahren nach Anspruch 15, bei dem das Maß für die Tonalität der Tonalitätsvektor oder eine Statistikgröße aus einer Mehrzahl von zeitlich aufeinanderfolgenden Tonalitätsvektoren des zu charakterisierenden Signals ist, wobei die Statistikgröße einen Mittelwert, eine Varianz oder ein Zentralmoment höherer Ordnung oder eine Kombination der genannten Statistikgrößen ist.

17. Verfahren nach Anspruch 15, bei dem das Maß für die Tonalität aus einer Differenz einer Mehrzahl von Tonalitätsvektoren oder einer linearen Filterung einer Mehrzahl von Tonalitätsvektoren abgeleitet ist.

18. Verfahren zum Erzeugen eines indexierten Signals, das einen Audioinhalt aufweist, mit folgenden Schritten:

Ermitteln (22) eines Maßes für eine Tonalität des Signals; und

Aufzeichnen (26) des Maßes für die Tonalität als Index in Zuordnung zu dem Signal, wobei der Index auf den Audioinhalt des Signals hinweist,

wobei das Maß für die Tonalität von einem Quotienten $F_{x;y}$ abgeleitet ist, der folgendermaßen definiert ist:

$$F_{x,y} = \frac{\sqrt[x]{\frac{1}{N}\sum_{n=0}^{N-1}X(n)^x}}{\sqrt[y]{\frac{1}{N}\sum_{n=0}^{N-1}X(n)^y}}$$

wobei X(n) eine Spektralkomponente des Signals bei einem Zählindex n ist, wobei n gleich 0 einen unteren Frequenzindex darstellt, wobei N einen oberen Frequenz darstellt, wobei x die erste Potenz ist, und wobei y die zweite Potenz ist, und wobei die erste und die zweite Potenz unterschiedlich sind.

19. Verfahren nach Anspruch 18, bei dem der Schritt des Ermittelns (22) eines Maßes für die Tonalität folgende Schritte aufweist:

Berechnen von Tonalitätswerten für verschiedene Spektralkomponenten oder Gruppen von Spektralkomponenten des Signals; und

Verarbeiten der Tonalitätswerten (60), um das Maß für die Tonalität zu erhalten; und

Einordnen (62) des Signals in eine Signalklasse abhängig von dem Maß für die Tonalität.

20. Verfahren nach Anspruch 18, das für eine Mehrzahl von Signalen durchgeführt wird, um eine Datenbank (54) aus Verweisen auf die Mehrzahl von Signalen samt zugeordneten Indizes, die auf Tonalitätseigenschaften der Signale hinweisen, zu erhalten.

21. Vorrichtung zum Charakterisieren eines Signals, das einen Audioinhalt darstellt, mit folgenden Merkmalen:

einer Einrichtung zum Ermitteln (12) eines Maßes für eine Tonalität des Signals; und

einer Einrichtung zum Treffen (16) einer Aussage über den Audioinhalt des Signals aufgrund des Maßes für die Tonalität des Signals,

wobei das Maß für die Tonalität von einem Quotienten $F_{x;y}$ abgeleitet ist, der folgendermaßen definiert ist:

$$F_{x,y} = \frac{\sqrt[x]{\frac{1}{N}\sum_{n=0}^{N-1}X(n)^x}}{\sqrt[y]{\frac{1}{N}\sum_{n=0}^{N-1}X(n)^y}}$$

wobei X(n) eine Spektralkomponente des Signals bei einem Zählindex n ist, wobei n gleich 0 einen unteren Frequenzindex darstellt, wobei N einen oberen Frequenz darstellt, wobei x die erste Potenz ist, und wobei y die zweite Potenz ist, und wobei die erste und die zweite Potenz unterschiedlich sind.

22. Vorrichtung zum Erzeugen eines indexierten Signals, das einen Audioinhalt aufweist, mit folgenden Merkmalen:

einer Einrichtung zum Ermitteln (22) eines Maßes für eine Tonalität des Signals; und

einer Einrichtung zum Aufzeichnen (26) des Maßes für die Tonalität als Index in Zuordnung zu dem Signal wobei der Index auf den Audioinhalt des Signals hinweist,

wobei das Maß für die Tonalität von einem Quotienten $F_{x;y}$ abgeleitet ist, der folgendermaßen definiert ist:

$$F_{x,y} = \frac{\sqrt[x]{\dfrac{1}{N}\sum_{n=0}^{N-1}X(n)^x}}{\sqrt[y]{\dfrac{1}{N}\sum_{n=0}^{N-1}X(n)^y}}$$

wobei X(n) eine Spektralkomponente des Signals bei einem Zählindex n ist, wobei n gleich 0 einen unteren Frequenzindex darstellt, wobei N einen oberen Frequenz darstellt, wobei x die erste Potenz ist, und wobei y die zweite Potenz ist, und wobei die erste und die zweite Potenz unterschiedlich sind.

**Claims**

1. A method for **characterizing** a signal representing an audio content, comprising the following steps:

   determining (12) a measure for a tonality of the signal; and

   making a statement (16) about the audio content of the signal on the basis of the measure for the tonality of the signal,

   wherein the measure for the tonality is derived from a quotient $F_{x;y}$ which is defined as follows:

$$F_{x,y} = \frac{\sqrt[x]{\dfrac{1}{N}\sum_{n=0}^{N-1}X(n)^x}}{\sqrt[y]{\dfrac{1}{N}\sum_{n=0}^{N-1}X(n)^y}}$$

   wherein X(n) is a spectral component of the signal for a numeration index n, wherein n equal to 0 represents a lower frequency index, wherein N represents an upper frequency index, wherein x is the first power and y the second power and wherein the first and second powers are different.

2. A method according to claim 1, wherein the first power (x) is greater than the second power (y) and wherein a quotient value greater than "1" indicates a tonal signal.

3. A method according to claim 1, wherein the first power (x) is smaller than the second power (y) and wherein a quotient value smaller than "1" and greater than "0" indicates a tonal signal.

4. A method according to claim 1 or 2, wherein the first power x is equal to 2 and the second power y is equal to 1, such that the quotient of the quadratic mean value and the arithmetic mean value of spectral components of the signal serves to derive the measure for the tonality.

5. A method according to one of the preceding claims, wherein the quotient is calculated using all the spectral components of the signal.

6. A method according to one of the preceding claims, wherein the quotient is calculated using some of the spectral components of the signal.

**7.** A method according to claim 6,
wherein at least two quotients are calculated for a spectrum of the signal, the quotients being calculated using spectral components which differ at least partly.

**8.** A method according to one of the preceding claims, wherein the step (16) of making a statement comprises the following steps:

comparing (64) the measure for the tonality of the signal with a plurality of known tonality measures for a plurality of known signals representing different audio contents;

establishing whether the audio content of the signal to be **characterized** agrees with the content of a known signal when the tonality measure of the signal to be **characterized** differs from the tonality measure assigned to the known signal by less than a predetermined amount.

**9.** A method according to claim 8, which includes the following additional step:

supplying a title, an author or other meta information for the signal to be **characterized** when a match is found.

**10.** A method according to one of the preceding claims, wherein the measure for the tonality is a quantitative value and where the method also includes the following steps:

calculating a tonality distance between the determined measure for the tonality of the signal and a known tonality measure for a known signal; and

quoting a similarity measure for the signal to be **characterized,** said similarity measure depending on the tonality distance and representing the similarity of the content of the known signal to the content of the signal to be **characterized**.

**11.** A method according to one of the preceding claims,
wherein the signal to be **characterized** is derived from an original signal by coding,
said coding exhibiting a blockwise conversion of the original signal into the frequency domain and a quantization of spectral values of the original signal under the control of a psychoacoustic model.

**12.** A method according to one of the preceding claims,
wherein the signal to be **characterized** is provided by emitting an original signal by means of a loudspeaker and receiving it by means of a microphone.

**13.** A method according to one of the preceding claims,
wherein the signal to be **characterized** contains a measure for the tonality as additional information, and
wherein the step of determining (12) includes reading the measure for the tonality from the additional information.

**14.** A method according to one of the preceding claims,
wherein at least two neighbouring spectral components in the frequency domain are grouped together and it is these grouped spectral components and not the individual spectral components which are then processed further.

**15.** A method according to one of the preceding claims,
wherein in the step of determining (12) a short-time spectrum of the signal to be **characterized** is subdivided into n bands and a tonality value is determined for each band,
wherein also for each of m successive short-time spectra of the signal to be **characterized** n tonality values are determined, and
wherein a tonality vector with a dimension m x n is formed, where m and n are greater than or equal to 1.

**16.** A method according to claim 15, wherein the measure for the tonality is the tonality vector or a statistical value from a plurality of temporally successive tonality vectors of the signal to be **characterized** and the statistical value is a mean value, a variance or a central moment of higher order or a combination of the cited statistical values.

**17.** A method according to claim 15, wherein the measure for the tonality is derived from a difference between a plurality of tonality vectors or a linear filtering of a plurality of tonality vectors.

18. A method for producing an indexed signal which has an audio content, comprising the following steps:

    determining (22) a measure for a tonality of the signal; and

    recording (26) the measure for the tonality as the index associated with the signal, said index indicating the audio content of the signal,

    wherein the measure for the tonality is derived from a quotient $F_{x;y}$ which is defined as follows:

$$F_{x,y} = \frac{\sqrt[x]{\frac{1}{N} \sum_{n=0}^{N-1} X(n)^x}}{\sqrt[y]{\frac{1}{N} \sum_{n=0}^{N-1} X(n)^y}}$$

    wherein X(n) is a spectral component of the signal for a numeration index n, wherein n equal to 0 represents a lower frequency index, wherein N represents an upper frequency index, wherein x is the first power and y the second power and wherein the first and second powers are different.

19. A method according to claim 18, wherein the step of determining (22) a measure for the tonality comprises the following steps:

    calculating tonality values for different spectral components or groups of spectral components of the signal; and

    processing the tonality values (60) to obtain the measure for the tonality; and

    allocating (62) the signal to a signal category on the basis of the measure for the tonality.

20. A method according to claim 18, which is performed for a plurality of signals to obtain a data bank (54) consisting of references to the plurality of signals together with the assigned indices, which indicate tonality properties of the signals.

21. A device for **characterizing** a signal representing an audio content, comprising
    a unit for determining (12) a measure for a tonality of the signal; and
    a unit for making a statement (16) about the audio content of the signal on the basis of the measure for the tonality of the signal,
    wherein the measure for the tonality is derived from a quotient $F_{x;y}$ which is defined as follows:

$$F_{x,y} = \frac{\sqrt[x]{\frac{1}{N} \sum_{n=0}^{N-1} X(n)^x}}{\sqrt[y]{\frac{1}{N} \sum_{n=0}^{N-1} X(n)^y}}$$

    wherein X(n) is a spectral component of the signal for a numeration index n, wherein n equal to 0 represents a lower frequency index, wherein N represents an upper frequency index, wherein x is the first power and y the second power and wherein the first and second powers are different.

22. A device for producing an indexed signal which has an audio content, comprising:

    a unit for determining (22) a measure for a tonality of the signal; and

    a unit for recording (26) the measure for the tonality as the index associated with the signal, said index indicating the audio content of the signal,

wherein the measure for the tonality is derived from a quotient $F_{x;y}$ which is defined as follows:

$$F_{x,y} = \frac{\sqrt[x]{\dfrac{1}{N} \displaystyle\sum_{n=0}^{N-1} X(n)^x}}{\sqrt[y]{\dfrac{1}{N} \displaystyle\sum_{n=0}^{N-1} X(n)^y}}$$

wherein X(n) is a spectral component of the signal for a numeration index n, wherein n equal to 0 represents a lower frequency index, wherein N represents an upper frequency index, wherein x is the first power and y the second power and wherein the first and second powers are different.

## Revendications

1. Procédé pour **caractériser** un signal qui représente un contenu audio, aux étapes suivantes consistant à :

   déterminer (12) une mesure pour une tonalité du signal ; et
   effectuer (16) une proposition sur le contenu audio du signal sur base de la mesure pour la tonalité du signal, la mesure pour la tonalité étant dérivée d'un quotient $F_{x;y}$ qui est défini comme suit :

$$F_{x,y} = \frac{\sqrt[x]{\dfrac{1}{N} \displaystyle\sum_{n=0}^{N-1} X(n)^x}}{\sqrt[y]{\dfrac{1}{N} \displaystyle\sum_{n=0}^{N-1} X(n)^y}}$$

   X(n) étant une composante spectrale du signal à un indice de comptage n, n égal à 0 représentant un indice de fréquence inférieur, N représentant une fréquence supérieure, x étant la première puissance et y étant la deuxième puissance, et la première et la deuxième puissance étant différentes.

2. Procédé selon la revendication 1, dans lequel la première puissance (x) est supérieure à la deuxième puissance (y), et dans lequel un résultat du quotient supérieur à "1" indique un signal tonal.

3. Procédé 3 selon la revendication 1, dans lequel la première puissance (x) est inférieure à la deuxième puissance (y), et dans lequel un résultat du quotient inférieur à "1" et supérieur à "0" indique un signal tonal.

4. Procédé selon la revendication 1 ou 2, dans lequel la première puissance x est égale à 2 et la deuxième puissance y est égale à 1, de sorte que le quotient de la valeur moyenne au carré et de la valeur moyenne arithmétique de composantes spectrales du signal serve à dériver la mesure de la tonalité.

5. Procédé selon l'une des revendications précédentes, dans lequel le quotient est calculé à l'aide de toutes les composantes spectrales du signal.

6. Procédé selon l'une des revendications précédentes, dans lequel le quotient est calculé à l'aide d'une partie des composantes spectrales du signal.

7. Procédé selon la revendication 6, dans lequel sont calculés au moins deux quotients pour un spectre du signal, les quotients étant calculés à l'aide de composantes spectrales au moins partiellement différentes.

8. Procédé selon l'une des revendications précédentes, dans lequel l'étape (16) d'établir une proposition présente les étapes suivantes consistant à :

comparer (64) la mesure de la tonalité du signal avec une pluralité de mesures de tonalité connues pour une pluralité de signaux connus qui représentent des contenus audio différents ;

constater que le contenu audio du signal à **caractériser** coïncide avec le contenu d'un signal connu, lorsque la mesure pour la tonalité du signal à **caractériser** a une déviation plus petite que prédéterminée par rapport à la mesure pour la tonalité qui est associée au signal connu.

9. Procédé selon la revendication 8, présentant, par ailleurs, l'étape suivante consistant à :

sortir un titre, un auteur ou toutes autres méta-informations pour le signal à **caractériser**, s'il est constaté une coïncidence.

10. Procédé selon l'une des revendications précédentes, dans lequel la mesure pour la tonalité est une grandeur quantitative, le procédé présentant, par ailleurs, les étapes suivantes consistant à :

calculer une distance de tonalité entre la mesure déterminée pour la tonalité du signal et une mesure pour la tonalité connue pour un signal connu ; et

indiquer une mesure de similitude pour le signal à **caractériser**, la mesure de similitude étant fonction de la distance de tonalité et représentant la similitude du contenu du signal connu avec le signal à **caractériser.**

11. Procédé selon l'une des revendications précédentes,
dans lequel le signal à **caractériser** est dérivé par codage à partir d'un signal original,
le codage présentant une conversion par bloc du signal original au domaine de fréquence et une quantification de valeurs spectrales du signal original commandée par un modèle psycho-acoustique.

12. Procédé selon l'une des revendications précédentes, dans lequel le signal à **caractériser** est préparé en sortant un signal original au moyen d'un haut-parleur et en l'enregistrant au moyen d'un microphone.

13. Procédé selon l'une des revendications précédentes,
dans lequel le signal à **caractériser** présente, comme information auxiliaire, une mesure pour la tonalité, et
dans lequel l'étape de détermination (12) présente la lecture de la mesure de la tonalité dans les informations auxiliaires.

14. Procédé selon l'une des revendications précédentes, dans lequel sont regroupées au moins deux composantes spectrales voisines en fréquence, après quoi sont post-traitées non pas les composantes spectrales individuelles, mais bien les composantes spectrales regroupées.

15. Procédé selon l'une des revendications précédentes,
dans lequel, à l'étape (12) de détermination, un spectre de courte durée du signal à **caractériser** est subdivisé en n bandes, pour chaque bande étant déterminée une valeur de tonalité,
dans lequel sont, par ailleurs, déterminées, pour chacun de m spectres de courte durée successifs du signal à **caractériser**, n valeurs de tonalité, et
dans lequel est formé un vecteur de tonalité avec une dimension qui est égale à m x n, m et n étant supérieurs ou égaux à 1.

16. Procédé selon la revendication 15, dans lequel la mesure pour la tonalité est le vecteur de tonalité ou une grandeur statistique à partir d'une pluralité de vecteurs de tonalité successifs dans le temps du signal à **caractériser**, la grandeur statistique étant une valeur moyenne, un variance ou un moment central d'ordre supérieur ou une combinaison desdites grandeurs statistiques.

17. Procédé selon la revendication 15, dans lequel la mesure pour la tonalité est dérivée d'une différence d'une pluralité de vecteurs de tonalité ou d'une filtration linéaire d'une pluralité de vecteurs de tonalité.

18. Procédé pour générer un signal indexé présentant un contenu audio, aux étapes suivantes consistant à :

déterminer (22) une mesure pour une tonalité du signal ; et
enregistrer (26) la mesure pour la tonalité comme indice en association au signal, l'indice indiquant le contenu du signal audio,
la mesure pour la tonalité étant dérivée d'un quotient $F_{x;y}$ qui est défini comme suit :

$$F_{x,y} = \frac{\sqrt[x]{\frac{1}{N}\sum_{n=0}^{N-1} X(n)^x}}{\sqrt[y]{\frac{1}{N}\sum_{n=0}^{N-1} X(n)^y}}$$

X(n) étant une composante spectrale du signal à un indice de comptage n, n égal à 0 représentant un indice de fréquence inférieur, N représentant une fréquence supérieure, x étant la première puissance et y étant la deuxième puissance, et la première et la deuxième puissance étant différentes.

19. Procédé selon la revendication 18, dans lequel l'étape de détermination (22) d'une mesure pour la tonalité présente les étapes suivantes consistant à :

calculer des valeurs de tonalité pour différentes composantes spectrales ou groupes de composantes spectrales du signal ; et
traiter les valeurs de tonalité (60), pour obtenir la mesure pour la tonalité ; et
classifier (62) le signal dans une classe de signal en fonction de la mesure pour le tonalité.

20. Procédé selon la revendication 18, qui est réalisé pour une pluralité de signaux, pour obtenir une banque de données (54) à partir du renvoi à la pluralité des signaux, y compris les indices associés qui indiquent les propriétés de tonalité des signaux.

21. Dispositif pour **caractériser** un signal représentant un contenu audio, aux caractéristiques suivantes :

un dispositif pour déterminer (12) une mesure pour une tonalité du signal ; et
un dispositif pour effectuer (16) une proposition quant au contenu du signal audio sur base de la mesure pour la tonalité du signal,
la mesure pour la tonalité étant dérivée d'un quotient $F_{x;y}$ qui est défini comme suit :

$$F_{x,y} = \frac{\sqrt[x]{\frac{1}{N}\sum_{n=0}^{N-1} X(n)^x}}{\sqrt[y]{\frac{1}{N}\sum_{n=0}^{N-1} X(n)^y}}$$

X(n) étant une composante spectrale du signal à un indice de comptage n, n égal à 0 représentant un indice de fréquence inférieur, N représentant une fréquence supérieure, x étant la première puissance et y étant la deuxième puissance, et la première et la deuxième puissance étant différentes.

22. Dispositif pour générer un signal indexé présentant un contenu audio, aux caractéristiques suivantes :

un dispositif pour déterminer (22) une mesure pour une tonalité du signal ; et
un dispositif pour enregistrer (26) la mesure pour la tonalité comme indice en association avec le signal, l'indice indiquant le contenu audio du signal,
la mesure pour la tonalité étant dérivée d'un quotient $F_{x;y}$ qui est défini comme suit :

$$F_{x,y} = \frac{\sqrt[x]{\dfrac{1}{N}\displaystyle\sum_{n=0}^{N-1} X(n)^x}}{\sqrt[y]{\dfrac{1}{N}\displaystyle\sum_{n=0}^{N-1} X(n)^y}}$$

X(n) étant une composante spectrale du signal à un indice de comptage n, n égal à 0 représentant un indice de fréquence inférieur, N représentant une fréquence supérieure, x étant la première puissance et y étant la deuxième puissance, et la première et la deuxième puissance étant différentes.

10    12    14    16    18

zu
charakterisierendes
Signal
(z. B. MP3
codiert)

Ermitteln
eines Maßes
für die Tonalität

Treffen einer
Aussage über
den Inhalt

Aussage
über den
Inhalt

**Fig. 1**

20    22    24    26    28

zu
indexierendes
Signal

Ermitteln
eines Maßes
für die Tonalität

Aufzeichnen
des Maßes
als Index
für das Signal

Signal
mit
Tonalitätsindex

**Fig. 2**

20

**Fig. 3**

**Fig. 4**

Fig. 5

EP 1 407 446 B1